# EUROPÄISCHE PATENTSCHRIFT

(11) **EP 2 933 816 B1**
(45) Veröffentlichungstag und Bekanntmachung des Hinweises auf die Patenterteilung: **13.06.2018**
(21) Anmeldenummer: 14164887.3
(22) Anmeldetag: 16.04.2014
(51) Int. Cl.: H01H 33/34, F15B 13/042

(54) **HYDRAULIKVENTIL ZUR VERMEIDUNG VON LECKAGE IN EINEM ANTRIEB ZUR BETÄTIGUNG EINES HOCH- ODER MITTELSPANNUNGSLEISTUNGSSCHALTERS**
HYDRAULIC VALVE FOR PREVENTING OF LEAKAGES IN A DRIVE FOR ACTUATING A HIGH VOLTAGE OR MEDIUM VOLTAGE CIRCUIT BREAKER
SOUPAPE HYDRAULIQUE DESTINÉE À ÉVITER LES FUITES DANS UN MÉCANISME DE COMMANDE D'UN COMMUTATEUR DE PUISSANCE À MOYENNE OU HAUTE TENSION

(43) Veröffentlichungstag der Anmeldung: 21.10.2015
(73) Patentinhaber: ABB Schweiz AG, 5400 Baden (CH)
(72) Erfinder: Schmidt, Matthias, 60596 Frankfurt (DE); Robens, Niko, 65719 Hofheim am Taunus (DE)
(74) Vertreter: ABB Patent Attorneys

(56) Entgegenhaltungen:
- EP-A1- 0 061 786
- EP-A1- 0 461 390
- US-A- 2 265 117
- US-A- 3 856 361

## Beschreibung

Die Erfindung betrifft den Bereich der hydraulischen Ansteuerung einer Kolben-Zylinderanordnung mittels einer Ventilanordnung, wobei die Ventilanordnung zu einem Antrieb zur Betätigung eines Hoch- oder Mittelspannungsleistungsschalters gehört. Im Mittelpunkt steht dabei insbesondere das Ergreifen von Gegenmaßnahmen beim Auftreten von Leckagen innerhalb der Ventilanordnung.
Aus der EP 2 234 135 B1, der DE 10 2009 053 901 B3 sowie der DE 0 061 786 A1 sind jeweils zweistufige Ventilanordnungen zur Betätigung eines Kolbens eines hydraulischen Antriebs bekannt, wobei der hydraulische Antrieb zur Betätigung eines Hochspannungsleistungsschalters vorgesehen ist. Die Ventilstufen umfassen eine Vorsteuerstufe und eine Hauptstufe.
Die US 2,265,117 A, die US 3,856,361 A und die EP 0 461 390 A1 beschreiben jeweils ein 3/3-Wege-Ventil, welches zwei unabhängig voneinander funktionsfähige Fluidkreise je nach Bedarf miteinander verbinden oder voneinander trennen kann. Ein derartiges Ventil wird beispielsweise bei Fahrzeugbremsen mit parallel zueinander arbeitenden Hydraulikkreisen verwendet, um im Fehlerfall den fehlerhaften der Hydraulikkreise vom Kreislauf abzutrennen (lockout). Das Ventil weist zwei diametral auf einer Achse liegende Fluidausgänge und einen zwischen diesen liegenden, um 90° versetzten Fluideingang auf. Die Fluidausgänge sind wechselweise von einer Kugel verschließbar, während der Fluideingang von dieser nicht verschließbar ist.
Die Ventilanordnung der EP 2 234 135 B1 besteht aus einem 3/2-Wegeventil als Vorsteuerventil sowie zwei 2/2-Wegeventilen als Hauptventile, während in der Ventilanordnung der DE 10 2009 053 901 B3 ebenfalls zwei 2/2-Wegeventile als Hauptventile vorhanden sind, jedoch die Funktion des 3/2-Wege-Vorsteuerventils durch zwei 2/2-Wegeventile als Vorsteuerventile ausgeübt wird.

In Figur 1 ist die Ventilanordnung der EP 2 234 135 B1 gemeinsam mit der durch die Ventilanordnung angesteuerten Kolben-Zylinderanordnung sowie dem zu betätigenden Hochspannungsleistungsschalter dargestellt. Ventilanordnung und Kolben-Zylinderanordnung gehören gemeinsam zu einem hydraulischen Antrieb zur Betätigung des Hochspannungsleistungsschalters.

In einer ersten Stellung des Vorsteuerventils 11 wird der Weg von einem Hochdrucktank 9 über das Hauptventil 2 zum in der Kolben-Zylinderanordnung 12 befindlichen Raum 10 freigemacht, d.h. das unter Hochdruck stehende Fluid wird dem Raum 10 oberhalb des Kolbens 6 zugeführt, so dass der Hochspannungsleistungsschalter 7 geschlossen wird. Das Fluid wird üblicherweise durch ein Hydrauliköl gebildet. In einer zweiten Stellung des Vorsteuerventils 11 wird der Raum 10 über das Hauptsteuerventil 1 mit einem Niederdrucktank 8 verbunden, d.h. der Raum 10 oberhalb des Kolbens 6 wird druckentlastet, wodurch sich der Kolben 6 zurückbewegt und den Hochspannungsleistungsschalter 7 öffnet.

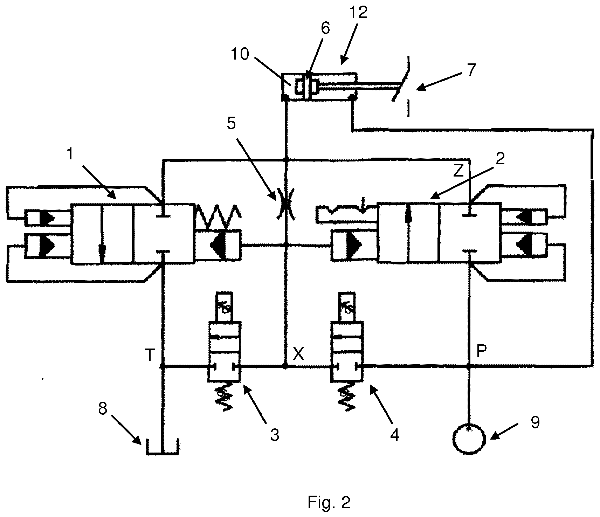

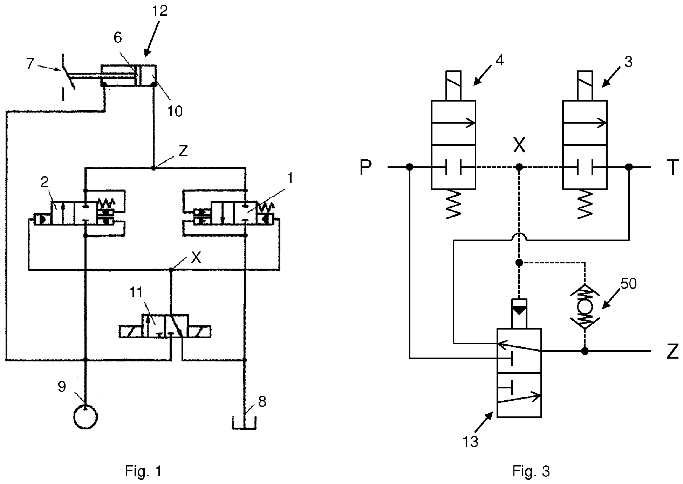

Die Ventilanordnung der DE 10 2009 053 901 B3 ist in Figur 2 zu sehen, wieder zusammen mit der Kolben-Zylinderanordnung 12 des hydraulischen Antriebs und dem zu betätigenden Schalter 7. Gleiche Elemente zu Fig. 1 tragen dieselben Bezugszeichen, und die grundsätzliche Arbeitsweise der Ventilanordnung ist dieselbe wie oben für Fig. 1 beschrieben.

Die Vorsteuerventile 3 und 4 der Fig. 2 sind als elektrisch betätigte und federrückgestellte NC-Ventile ausgeführt. Durch die technisch bedingte Federrückstellung kommt es nach einer Schaltung stets zu der Situation, dass im Vorsteuerbereich, also im hydraulischen Bereich der Vorsteuerstufe, ein eingeschlossenes Ölvolumen besteht, welches für die korrekte Positionierung der Ventile 1 und 2 der Hauptstufe für die Zeitdauer bis zum nächsten Schaltvorgang verantwortlich ist.

Die 2/2-Wegeventile 3 und 4 der Vorsteuerstufe sind jedoch niemals vollkommen leckagefrei. Je nach Schaltstellung kann nun die interne Leckage an den Vorsteuerventilen 3 und 4 zu einem unerwünschten Druckaufbau oder -abbau führen, was die korrekte Positionierung der Hauptventile 1 und 2 gefährden könnte.

Dies muss verhindert werden, da es sonst zu einem Fehlverhalten der Hauptstufe und damit einem Fehlverhalten des Antriebs und des Hochspannungsleistungsschalters kommt.

In der DE 10 2009 053 901 B3 wird das Problem dadurch gelöst, dass zwischen dem Vorsteuerbereich, also dem hydraulischen Bereich, in dem das Öl eingeschlossen ist, und dem Hauptsteuerbereich, also dem Bereich, der den Hauptkolben 6 antreibt, eine kleine Blende 5 eingebaut wird. Konkret befindet sich die Blende 5 zwischen der mit den Steuereingängen der Hauptventile 1, 2 verbundenen Ausgangsseite X der Vorsteuerventile 3, 4 und der mit der Kolben-Zylinder-Anordnung 12 verbundenen Ausgangsseite Z der Hauptventile 1, 2.

Eine derartige Verbindung zwischen Vorsteuer- und Hauptsteuerbereich ist jedoch während des Schaltens unerwünscht, da die beiden Bereiche gerade hydraulisch unabhängig voneinander arbeiten sollen (vgl. auch Fig. 1).

Im statischen Fall, wenn also keine Schaltung stattfindet, hilft die Blende jedoch, dass möglicherweise vorhandene Leckagen ausgeglichen werden, wobei man sich zu Nutze macht, dass im statischen Zustand im Vorsteuerbereich und im Hauptsteuerbereich immer der gleiche Druck herrscht, und dass der Hauptsteuerbereich nicht abgeschlossen und damit in der Lage ist, die entstandenen Leckagen auszugleichen. Da es sich im statischen Fall um sehr geringe Volumenströme handelt, wirkt die Blende wie eine offene Verbindung zwischen Haupt- und Vorsteuerbereich, d.h. ein leckagebedingter Ölfluss aus dem Vorsteuerbereich kann über die Blende in den Hauptsteuerbereich gelangen und dort abgeführt werden.

Damit diese offene Verbindung jedoch während des Schaltens, also im dynamischen Fall, nicht zu einer Beeinträchtigung der Funktionsweise der Ventilanordnung führt, wird die Blende möglichst klein ausgeführt. Damit macht man sich den Effekt zu Nutze, dass im dynamischen Fall zwischen Haupt- und Vorsteuerbereich erhebliche und stark veränderliche Druckunterschiede herrschen, weshalb an den Hauptventilen sehr große Volumenströme auftreten. Aufgrund der im Vergleich zu dem jeweils bewusst geöffneten Ventil sehr kleinen Durchlassöffnung der Blende und da im dynamischen Fall alles äußerst schnell passiert, wirkt die Blende dann wie eine Trennung zwischen Haupt- und Vorsteuerbereich.

Dementsprechend sorgt die Blende grundsätzlich für eine Trennung von Haupt- und Vorsteuerbereich im dynamischen Fall, sowie für eine verlustarme Verbindung zwischen Haupt- und Vorsteuerbereich im statischen Fall.

Die Blende stellt somit in jedem Fall einen Kompromiss zwischen "so klein wie möglich" für den dynamischen Fall und "so groß wie möglich" für den statischen Fall dar. Es hat sich nun in praktischen Tests herausgestellt, dass dieser Kompromiss in Einzelfällen nicht genügen kann.

Ausgehend von diesem Stand der Technik ist es deshalb Aufgabe der Erfindung, eine alternative Möglichkeit anzugeben, mit der Leckagen aus dem Vorsteuerbereich einer zweistufigen Ventilanordnung zur Betätigung eines Kolbens eines hydraulischen Antriebs über den Hauptsteuerbereich abgeführt werden können, ohne dabei den Schaltfall negativ zu beeinträchtigen.

Diese Aufgabe wird gelöst durch eine Ventilanordnung gemäß Anspruch 1. Das Hydraulikventil umfasst
- ein Gehäuse mit einem ersten Kanaleingang zur Anbindung an die erste Druckleitung und einem zweiten Kanaleingang zur Anbindung an die zweite Druckleitung sowie einem zwischen dem ersten und dem zweiten Kanaleingang befindlichen Hohlraum,
- einem in dem Hohlraum beweglichen Verschlusskörper, dessen Umfang zumindest an einer Stelle größer ist als der jeweilige Umfang der an den Hohlraum angrenzenden Öffnung des ersten und des zweiten Kanaleingangs, wobei der Verschlusskörper geometrisch so an den Querschnitt dieser Öffnungen angepasst ist, dass er sie beim jeweiligen Aufsitzen vollständig verschließt,
- einem in der ersten Kanalöffnung befestigten ersten Federelement, das an einer ersten Seite des Verschlusskörpers mit diesem verbunden ist und im entspannten Zustand in den Hohlraum hineinragt,
- einem in der zweiten Kanalöffnung befestigen zweiten Federelement, das an einer zweiten Seite des Verschlusskörpers mit diesem verbunden ist und im entspannten Zustand in den Hohlraum hineinragt.
Die Kanaleingänge des Hydraulikventils sind dafür vorgesehen, jeweils mit einer Druckleitung verbunden zu werden. Die Druckleitungen können dabei innerhalb eines Gehäuseblocks als Kanäle oder als externe Druckleitungen ausgestaltet sein.

Dementsprechend kann das Gehäuse des hier beschriebenen Hydraulikventils ein in sich abgeschlossenes Bauteil umschließen, oder es kann integrierter Bestandteil eines weitere Hydraulikelemente umfassenden größeren Gehäuseblocks sein.

Das Ventil besitzt also zwei Kanaleingänge und damit Anschlüsse und besteht aus einem in einem Hohlraum eines Gehäuses beweglich angeordneten Verschlusskörper, der so zwischen zwei Federelementen eingespannt ist, dass er bei vorbekannter Druckdifferenz zwischen beiden Kanaleingängen zwischen den beiden an den Hohlraum angrenzenden Öffnungen der Kanaleingänge, gehalten wird. In diesem Zustand kann das Ventil also in beide Richtungen durchströmt werden. Die an den Hohlraum angrenzenden Öffnungen der Kanaleingänge werden auch als Ventilsitze bezeichnet. Gemäß der Erfindung wird das Hydraulikventil in einer Ventilanordnung zwischen zwei Druckleitungen eingesetzt, und zwar mit dem Zweck, bis zu einem vordefinierten Volumenstrom bzw. bis zu einer vordefinierten Druckdifferenz einen Durchgang zu ermöglichen und oberhalb dieses vordefinierten Volumenstroms bzw. dieser vordefinierten Druckdifferenz die beiden Druckleitungen voneinander zu trennen, wobei das Hydraulikventil in dieser Art in beiden Volumenstromrichtungen wirksam sein soll.
Im statischen Zustand hält dann das vorgeschlagene Hydraulikventil die Verbindung zwischen den Druckleitungen offen, da der Verbindungskörper so von den Federelementen gehalten wird, dass er von beiden Ventilsitzen entfernt ist. Die Federelemente sind in ihrer Ausgestaltung entsprechend an die vordefinierte Druckdifferenz, ab der getrennt werden soll, sowie an die Geometrie des Hohlraums und die Druckverhältnisse im dynamischen Zustand angepasst. Dies kann bedeuten, dass die Federelemente mit unterschiedlicher Steifigkeit ausgeführt sein können, um so beispielsweise bei unterschiedlichen Volumenströmen richtungsabhängig schließen zu können.
Durch das Offenhalten des Verbindungsweges zwischen den Druckleitungen im statischen Fall kann ein leckagebedingter Fluidstrom von einem hydraulisch in sich abgeschlossenen Bereich durch das Ventil hindurch in einen hydraulisch nicht abgeschlossenen Bereich gelangen und somit abgeführt werden. Im dynamischen Zustand der Ventilanordnung wirkt die Veränderung der zwischen den Druckleitungen entstehenden Druckdifferenz auf den Verschlusskörper und bringt ihn zum Aufsitzen auf einem der Ventilsitze, so dass die Druckleitungen voneinander getrennt werden.

Das Hydraulikventil kann also die Blende in der oben beschriebenen Anwendung vollständig ersetzen. Der Nachteil der Blende, dass ihr Durchlassquerschnitt nicht zu groß gewählt werden kann, um ein sicheres Trennen der Druckleitungen im dynamischen Fall zu gewährleisten, ist beim Hydraulikventil nicht gegeben. Stattdessen kann bei der Auslegung des hier vorgeschlagenen Hydraulikventils ein für das Abführen von Leckagen ausreichend großer Öffnungsquerschnitt gewählt werden, da dieser im dynamischen Fall durch den Verschlusskörper in jedem Fall sicher verschlossen wird. Die Auslegung des leckageabführenden Bauteils zur Anpassung an die konkreten physikalischen Gegebenheiten in der umgebenden Ventilanordnung ist somit deutlich vereinfacht.

Zur Anwendung in einer Ventilanordnung, bei der gewünscht ist, dass das Hydraulikventil in beiden Durchströmungsrichtungen gleich wirkt, dass es also gleiche Verluste generiert und bei gleichen Volumenströmen schließt, werden die erste und die zweite Kanalöffnung zueinander gleichgroß ausgeführt und das erste und das zweite Federelement identisch gestaltet.

Bevorzugt können die an den Hohlraum angrenzenden Öffnungen des ersten und des zweiten Kanaleingangs jeweils kreisrund ausgeführt sein. Der Verschlusskörper weist dann an seinen mit den Federelementen verbundenen Seiten jeweils mindestens eine kreisrunde Querschnittfläche auf, die jeweils exakt der Querschnittsfläche der zugeordneten Öffnung entspricht. Andere Gestaltungen der Kanaleingangsöffnungen, also der Ventilsitze, sowie des Verschlusskörpers sind denkbar, beispielsweise könnten die Querschnitte auch elliptisch ausgeführt sind.

Im Fall von kreisrunden Ventilsitzen könnten die erste und die zweite Seite des Verschlusskörpers als Kugelabschnitt ausgeführt sein, da dann auch bei Fertigungstoleranzen gesichert ist, dass die jeweiligen Kanaleingänge wirklich verschlossen sind. In der einfachsten Form kann der Verschlusskörper als Kugel ausgeführt sein. Aber auch eine von der Kugelform abweichende, längliche Gestaltung mit daran angebrachten Kugelenden ist denkbar, beispielsweise ein Zylinder oder ein Ellipsoid.

Das Hydraulikventil ist in einer zweistufigen Ventilanordnung zum Betätigen eines Kolbens einer hydraulischen Kolben-Zylinderanordnung angeordnet, wobei die Ventilanordnung eine Vorsteuerstufe mit mindestens einem Vorsteuerventil, und eine Hauptstufe mit mindestens einem Hauptventil umfasst. Dabei ist die Ventilanordnung so ausgestaltet, dass in einer ersten Stellung des mindestens einen Vorsteuerventils eine hydraulische Verbindung von einem Hochdrucktank über die Hauptstufe zur Kolben-Zylinderanordnung hergestellt wird, so dass ein unter Hochdruck stehendes Fluid einem auf einer Seite des Kolbens befindlichen Raum zugeführt wird, und in einer zweiten Stellung des mindestens einen Vorsteuerventils wird der auf der einen Seite des Kolbens befindliche Raum über die Hauptstufe mit einem Niederdrucktank verbunden. Das oben beschriebene Hydraulikventil wird zwischen einer mit mindestens einem Steuereingang der Hauptstufe verbundenen Ausgangsseite der Vorsteuerstufe und einer mit der Kolben-Zylinder-Anordnung verbundenen Ausgangsseite der Hauptstufe angeordnet.

In einer Ausgestaltung enthält die Vorstufe zwei 2/2-Wegeventile, welche insbesondere als elektrisch betätigte und federrückgestellte Ventile ausgeführt sein können, die in Ruhestellung geschlossen sind, auch NC-Ventile genannt.

Die zweistufige Ventilanordnung mit dem hier vorgeschlagenen Hydraulikventil kann vorteilhaft in einem hydraulischen Antrieb zur Betätigung eines Hoch- oder Mittelspannungsleistungsschalters eingebaut sein, da es im Hoch- bzw. Mittelspannungsbereich aus Sicherheitsgründen besonders darauf ankommt, dass leckagebedingte Funktionsfehler vermieden werden. Der Hochspannungsbereich umfasst dabei Spannungsniveaus zwischen ungefähr 50 kV und derzeit 1100 kV, und der Mittelspannungsbereich liegt ungefähr zwischen 1 kV und 50 kV. Leistungsschalter können beispielsweise sein Trennschalter, Erdungsschalter, Schnellerder oder kombinierte Erdungs- und Trennschalter.

Anhand der in den weiteren Zeichnungen dargestellten Ausführungsbeispiele sollen die Erfindung und ihre mögliche Ausgestaltung näher beschrieben werden.

Es zeigen:
- Fig. 1: eine erste bekannte zweistufige Ventilanordnung zur Betätigung eines Kolbens und damit eines Hochspannungsleistungsschalters;
- Fig. 2: eine zweite bekannte zweistufige Ventilanordnung mit einer Blende zur Abführung eines Leckagestroms;
- Fig. 3: eine dritte zweistufige Ventilanordnung mit einem Hydraulikventil zur Abführung eines Leckagestroms;
- Fig. 4: ein symmetrisch ausgeführtes Hydraulikventil mit kugelförmigem Verschlusskörper;
- Figs. 5a, 5b: das Hydraulikventil aus Fig. 4 mit einer Schnittansicht.

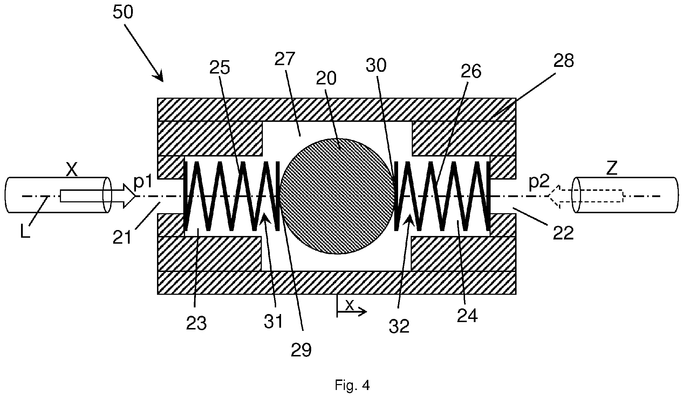

Das in Figur 4 gezeigte Hydraulikventil 50 dient der Verbindung einer ersten fluidführenden Druckleitung X mit einer zweiten fluidführenden Druckleitung Z und umfasst ein in der Zeichenebene zur Längsachse L symmetrisch ausgebildetes Gehäuse 28. In das Gehäuse 28 sind zwei nach außen weisende Anschlussöffnungen 21, 22 eingearbeitet, die sich hier direkt gegenüberliegen. Diese könnten aber auch in jeder anderen Anordnung zueinander in das Gehäuse 28 eingebracht sein. Von den Anschlussöffnungen ist eine erste Anschlussöffnung 21 zur Verbindung des Ventils mit einer ersten Druckleitung X vorgesehen, und eine zweite Anschlussöffnung 22 zur Verbindung mit einer zweiten Druckleitung Z. An die Anschlussöffnungen 21, 22 schließt sich jeweils ein erster bzw. zweiter Federführungskanal 23, 24 an, welche beide in einen Hohlraum 27 münden.

Die erste Anschlussöffnung 21 bildet gemeinsam mit dem ersten Federführungskanal 23 einen ersten Kanaleingang zur Anbindung an die erste Druckleitung X, und die zweite Anschlussöffnung 22 bildet gemeinsam mit dem zweiten Federführungskanal 24 einen zweiten Kanaleingang zur Anbindung an die zweite Druckleitung Z.

In dem Hohlraum ist ein Verschlusskörper 20 vorgesehen, welcher an zwei Federelementen 25, 26 befestigt ist. Das erste der beiden Federelemente 25 ist mit einem seiner Enden in der ersten Kanalöffnung befestigt, wobei es in der hier gezeigten Ausführung in dem ersten Federführungskanal 23 befestigt ist. Das andere Ende des ersten Federelementes 25 ist an einer ersten Seite 29 des Verschlusskörpers 20 befestigt. In analoger Weise ist das zweite der beiden Federelemente 26 mit einem seiner Enden in der zweiten Kanalöffnung befestigt, wobei es in der hier gezeigten Ausführung in dem zweiten Federführungskanal 24 befestigt ist. Das andere Ende des zweiten Federelementes 25 ist an einer zweiten Seite 30 des Verschlusskörpers 20 befestigt. In der hier gezeigten Ausführung liegen sich die erste und zweite Seite des Verschlusskörpers 29, 30 gegenüber. Es sind jedoch auch andere Anordnungen denkbar. Das erste und das zweite Federelement 25, 26 ragen im entspannten Zustand jeweils in den Hohlraum 27 hinein. Der Verschlusskörper 20 ist abgesehen von der Befestigung an den beiden Federelementen 25, 26 frei innerhalb des Hohlraums 27 beweglich.

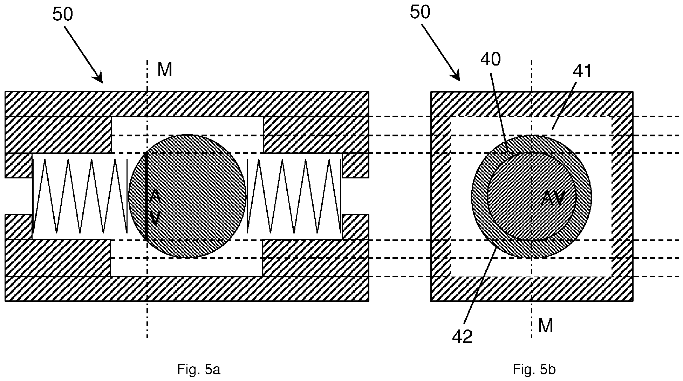

Der Verschlusskörper 20 ist als Kugel ausgestaltet, deren Umfang größer ist als der jeweilige Umfang der an den Hohlraum angrenzenden Öffnungen 31, 32 des ersten und des zweiten Kanaleingangs. Die Öffnungen 31, 32 weisen einen kreisrunden Querschnitt auf, und werden auch als Ventilsitz bezeichnet. Dementsprechend ist der Verschlusskörper 20 aufgrund seiner Kugelform geometrisch so an den Querschnitt der Öffnungen 31, 32 angepasst, dass er die Öffnungen 31, 32 beim jeweiligen Aufsitzen vollständig verschließt. Die die Öffnungen 31, 32 verschließende Querschnittsfläche AV ist in Fig. 5b zu sehen, welche eine Schnittansicht durch das Hydraulikventil 50 entlang der Schnittlinie M aus Fig. 5a darstellt. Außerdem sind in der Schnittansicht zu erkennen der Umfang 42 des Verschlusskörpers 20 sowie dessen maximale Querschnittsfläche 40, sowie der innerhalb des Gehäuses 28 verbleibende Durchlassquerschnitt 41, welcher größer ausgeführt werden kann als bei der eingangs beschriebenen Blende.

Das Hydraulikventil 50 der Fig. 4 ist symmetrisch aufgebaut, d.h. folgende Elemente sind zueinander gleichgroß bzw. identisch ausgeführt: die erste und die zweite Anschlussöffnung 21, 22; der erste und der zweite Federführungskanal 23, 24; und das erste und das zweite Federelement 25, 26.

Damit ist das Hydraulikventil 50 der Fig. 4 besonders vorteilhaft zum Einbau in eine zweistufige Ventilanordnung nach beispielsweise den Figuren 1, 2 oder 3 geeignet, wobei die zweistufige Ventilanordnung jeweils zum Betätigen eines Kolbens 6 einer hydraulischen Kolben-Zylinderanordnung 12 vorgesehen ist und der Kolben 6 wiederum einen Hochspannungsleistungsschalter 7 betätigt. In den Ventilanordnungen nach den Figuren 1, 2 oder 3 würde das Hydraulikventil 50 jeweils zwischen der ersten Druckleitung X und der zweiten Druckleitung Z vorgesehen sein. In Figur 2 würde es dementsprechend die Blende 5 ersetzen.

Die zweistufigen Ventilanordnungen umfassen jeweils eine Vorsteuerstufe mit mindestens einem Vorsteuerventil (3, 4, 11) und eine Hauptstufe mit mindestens einem Hauptventil (1, 2, 13), wobei in einer ersten Stellung des mindestens einen Vorsteuerventils eine hydraulische Verbindung von einem Hochdrucktank 9 über die Hauptstufe zur Kolben-Zylinderanordnung 12 hergestellt wird, so dass ein unter Hochdruck stehendes Fluid einem auf einer Seite des Kolbens 6 befindlichen Raum 10 zugeführt wird, und wobei in einer zweiten Stellung des mindestens einen Vorsteuerventils der auf der einen Seite des Kolbens 6 befindliche Raum 10 über die Hauptstufe mit einem Niederdrucktank 8 verbunden wird.

Das Hydraulikventil 50 ist innerhalb dieser jeweiligen Ventilanordnung zwischen einer mit mindestens einem Steuereingang der Hauptstufe verbundenen Ausgangsseite X der Vorsteuerstufe und einer mit der Kolben-Zylinder-Anordnung 12 verbundenen Ausgangsseite Z der Hauptstufe angeordnet. Die übrigen bezeichneten Druckleitungen weisen auf die Verbindungsleitung P zum Hochdrucktank 9 hin sowie auf die Verbindungsleitung T zum Niederdrucktank 8.

Im statischen Zustand der Ventilanordnungen nach den Figuren 1, 2 und 3, wenn also der Hochspannungsleistungsschalter 7 gerade nicht betätigt wird, ist der in der ersten Druckleitung X anliegende Druck p1 genauso groß wie der in der zweiten Druckleitung Z anliegende Druck p2. Beide Druckleitungen bzw. Kanäle können also -je nach Stellung des Hochspannungsleistungsschalters 7 - auf dem gleichen Hochdruckniveau liegen oder überhaupt nicht druckbeaufschlagt sein. Dadurch und durch die symmetrische Ausgestaltung des Hydraulikventils 20 ist im statischen Zustand der Verschlusskörper 20 zwischen den zwei Ventilsitzen (31, 32) mittig innerhalb des Hohlraums 27 zentriert.

Tritt jetzt ein Volumenstrom aufgrund interner oder externer Leckage auf, können diese an engen durchströmten Querschnitten innerhalb der Ventilanordnung zu Druckdifferenzen führen, welche im ungünstigsten Fall ein Schließen der geöffneten Hauptventilpatrone bewirken können, was einen schweren Fehlerfall des Hochspannungsleistungsschalter hervorrufen kann. Ein solcher leckagebedingter Volumenstrom kann jedoch nun in beide Richtungen - angedeutet durch die Blockpfeile in Fig. 4 - durch das Hydraulikventil 50 hindurchtreten, und somit in einen Bereich der Ventilanordnung gelangen, in dem er abgeführt werden kann, wodurch ein Ausgleich der Leckagen erzielt und somit die Entstehung unerwünschter Druckdifferenzen vermieden wird. Wohin die Leckage abgeführt wird, hängt von der jeweiligen Schaltstellung des Hochspannungsleistungsschalters ab. In Stellung "Ein" stehen X und Z unter Hochdruck. Jetzt kann im X-Bereich eine Leckage von X nach T entstehen. Durch das Hydraulikventil 50 wird nun aus Z das durch die Leckage verlorene Volumen nachgeführt. Dieses Volumen kommt aus dem Hochdruckbereich. In Stellung "Aus" sind X und Z drucklos. Im X-Bereich kann nun eine Leckage von P nach X entstehen. Dieses Volumen wird dann durch das Hydraulikventil 50 in den Z-Bereich und von dort in den Niederdrucktank abgeführt.

Im dynamischen Zustand der Ventilanordnungen der Figuren 1, 2 und 3, also während einer Betätigung des Kolbens 6 und damit des Hochspannungsleistungsschalters 7, wird sich der Druck p1 schlagartig vom Druck p2 unterscheiden. Aufgrund dieser plötzlich auftretenden Druckdifferenz wird ein Schließen des Hydraulikventils 50 bewirkt. Sofern der an der ersten Druckleitung X anliegende Druck p1 größer ist als der an der zweiten Druckleitung Z anliegende Druck p2, wird das Verschließen des Hydraulikventils 50 über ein Aufsitzen des Verschlusskörpers 20 auf der Öffnung 32 des zweiten Kanaleingangs erreicht, und bei umgekehrten Druckverhältnissen über ein Aufsitzen des Verschlusskörpers 20 auf der Öffnung 31 des ersten Kanaleingangs.

## Patentansprüche

1. Zweistufige Ventilanordnung zum Betätigen eines Kolbens (6) einer hydraulischen Kolben-Zylinderanordnung (12) eines Antriebs zur Betätigung eines Hoch- oder Mittelspannungsleistungsschalters, mit einer Vorsteuerstufe umfassend mindestens ein Vorsteuerventil (3, 4, 13), und mit einer Hauptstufe umfassend mindestens ein Hauptventil (1,2, 11), wobei
• in einer ersten Stellung des mindestens einen Vorsteuerventils eine hydraulische Verbindung von einem Hochdrucktank (9) über die Hauptstufe zur Kolben-Zylinderanordnung (12) hergestellt wird, so dass ein unter Hochdruck stehendes Fluid einem auf einer Seite des Kolbens (6) befindlichen Raum (10) zugeführt wird, und
• in einer zweiten Stellung des mindestens einen Vorsteuerventils der auf der einen Seite des Kolbens (6) befindliche Raum (10) über die Hauptstufe mit einem Niederdrucktank (8) verbunden wird,
**dadurch gekennzeichnet, dass** ein Hydraulikventil (50) zur Verbindung dient zwischen einer ersten fluidführenden Druckleitung (X) einer mit mindestens einem Steuereingang der Hauptstufe verbundenen Ausgangsseite der Vorsteuerstufe und einer zweiten fluidführenden Druckleitung (Z) einer mit der Kolben-Zylinder-Anordnung (12) verbundenen Ausgangsseite der Hauptstufe, wobei das Hydraulikventil (50) nur zwei Anschlüsse besitzt und umfasst:
• ein Gehäuse (28) mit einem ersten Kanaleingang (21, 23) zur Anbindung an die erste Druckleitung (X) und einem zweiten Kanaleingang (24, 26) zur Anbindung an die zweite Druckleitung (Z) sowie einem zwischen dem ersten und dem zweiten Kanaleingang befindlichen Hohlraum (27),
• einem in dem Hohlraum (27) beweglichen Verschlusskörper (20), dessen Umfang (42) zumindest an einer Stelle größer ist als der jeweilige Umfang der an den Hohlraum angrenzenden Öffnung (31, 32) des ersten und des zweiten Kanaleingangs, wobei der Verschlusskörper (20) geometrisch so an den Querschnitt dieser Öffnungen (31, 32) angepasst ist, dass er sie beim jeweiligen Aufsitzen vollständig verschließt,
• einem in der ersten Kanalöffnung (21, 23) befestigten ersten Federelement (25), das an einer ersten Seite (29) des Verschlusskörpers (20) mit diesem verbunden ist und im entspannten Zustand in den Hohlraum (27) hineinragt,
• einem in der zweiten Kanalöffnung (22, 24) befestigten zweiten Federelement (26), das an einer zweiten Seite (30) des Verschlusskörpers (20) mit diesem verbunden ist und im entspannten Zustand in den Hohlraum (27) hineinragt,
wobei das Hydraulikventil in der Ventilanordnung zwischen der ersten Druckleitung (X) und der zweiten Druckleitung (Z) so eingesetzt wird, dass bis zu einem vordefinierten Volumenstrom bzw. bis zu einer vordefinierten Druckdifferenz ein Durchgang ermöglicht wird und oberhalb dieses vordefinierten Volumenstroms bzw. dieser vordefinierten Druckdifferenz die beiden Druckleitungen voneinander getrennt werden, wobei das Hydraulikventil in dieser Art in beiden Volumenstromrichtungen wirksam sein wird,
wobei die Ventilanordnung derart ausgebildet ist, dass im statischen Fall, wenn keine Schaltung stattfindet, das Hydraulikventil die Verbindung zwischen den Druckleitungen offen hält, und
wobei im dynamischen Fall, während des Schaltens, eine Veränderung der zwischen den Druckleitungen entstehenden Druckdifferenz auf den Verschlusskörper (20) wirkt und ein Schließen des Hydraulikventils (50) bewirkt.

2. Ventilanordnung nach Anspruch 1, **dadurch gekennzeichnet, dass** bei dem Hydraulikventil (50) die erste und zweite Kanalöffnung (21 bis 24) zueinander gleichgroß ausgeführt sind und dass das erste und das zweite Federelement (25, 26) identisch gestaltet sind.

3. Ventilanordnung nach Anspruch 1 oder 2, **dadurch gekennzeichnet, dass** bei dem Hydraulikventil (50) die an den Hohlraum (27) angrenzende Öffnung (31, 32) des ersten und des zweiten Kanaleingangs jeweils kreisrund ausgeführt ist und dass der Verschlusskörper (20) an seinen mit den Federelementen (25, 26) verbundenen Seiten (29, 30) jeweils mindestens eine kreisrunde Querschnittfläche (AV) aufweist, die jeweils exakt der Querschnittsfläche der zugeordneten Öffnung entspricht.

4. Ventilanordnung nach einem der vorigen Ansprüche, **dadurch gekennzeichnet, dass** bei dem Hydraulikventil (50) die erste und die zweite Seite (29, 30) des Verschlusskörpers als Kugelabschnitt ausgeführt sind.

5. Ventilanordnung nach einem der vorigen Ansprüche, **dadurch gekennzeichnet, dass** die Vorstufe zwei 2/2-Wegeventile (3, 4) enthält.

6. Hydraulischer Antrieb zur Betätigung eines Hoch- oder Mittelspannungsleistungsschalters (7) umfassend eine zweistufige Ventilanordnung nach einem der Ansprüche 1 bis 5 .

## Claims

1. Two-stage valve arrangement for activating a piston (6) of a hydraulic piston/cylinder arrangement (12) of an actuator for activating a high- or medium-voltage circuit breaker, with a pilot stage comprising at least one pilot valve (3, 4, 13), and with a main stage comprising at least one main valve (1, 2, 11), wherein
• in a first position of the at least one pilot valve, a hydraulic connection is established from a high-pressure tank (9) to the piston/cylinder arrangement (12) via the main stage so that a fluid at high pressure is supplied to a space (10) situated on one side of the piston (6), and
• in a second position of the at least one pilot valve, the space (10) situated on one side of the piston (6) is connected to a low-pressure tank (8) via the main stage,
**characterized in that** a hydraulic valve (50) serves for connection between a first fluid-conducting pressure line (X) of an outlet side, connected to at least one control inlet of the main stage, of the pilot stage and a second fluid-conducting pressure line (Z) of an outlet side, connected to the piston/cylinder arrangement (12), of the main stage, wherein the hydraulic valve (50) has only two connections and comprises:
• a housing (28) with a first channel inlet (21, 23) for attachment to the first pressure line (X), and a second channel inlet (24, 26) for attachment to the second pressure line (Z), and a cavity (27) situated between the first and the second channel inlet,
• a sealing body (20) which can move in the cavity (27) and has a circumference (42) which is greater, at least at one point, than the respective circumference of the opening (31, 32), adjoining the cavity, of the first and the second channel inlet, wherein the sealing body (20) is geometrically matched to the cross-section of these openings (31, 32) such that it completely seals it when it sits on it,
• a first spring element (25), fastened in the first channel opening (21, 23), which is connected to the sealing body (20) on a first side (29) and projects into the cavity (27) in the relaxed state,
• a second spring element (26), fastened in the second channel opening (22, 24), which is connected to the sealing body (20) on a second side (30) and projects into the cavity (27) in the relaxed state,
wherein the hydraulic valve is used in the valve arrangement between the first pressure line (X) and the second pressure line (Z) such that passage is permitted up to a predefined volume flow or up to a predefined difference in pressure, and the two pressure lines are separated from one another above this predefined volume flow or this predefined difference in pressure, wherein, in this way, the hydraulic valve is made effective in both directions of the volume flow,
wherein the valve arrangement is designed such that, in the static situation, when no switching takes place, the hydraulic valve keeps the connection between the pressure lines open, and wherein, in the dynamic situation, during switching, a change in the difference in pressure occurring between the pressure lines acts on the sealing body (20) and effects a closure of the hydraulic valve (50).

2. Valve arrangement according to Claim 1, **characterized in that** in the hydraulic valve (50) the first and the second channel opening (21 to 24) are designed to have the same size relative to each other, and **in that** the first and the second spring element (25, 26) have identical designs.

3. Valve arrangement according to Claim 1 or 2, **characterized in that** in the hydraulic valve (50) the opening (31, 32), adjoining the cavity (27), of the first and the second channel inlet in each case has a circular design, and **in that**, on each of its sides (29, 30) connected to the spring elements (25, 26), the sealing body (20) then has at least one circular cross-sectional area (AV) which in each case corresponds exactly to the cross-sectional area of the associated opening.

4. Valve arrangement according to one of the preceding claims, **characterized in that** in the hydraulic valve (50) the first and the second side (29, 30) of the sealing body take the form of a spherical segment.

5. Valve arrangement according to one of the preceding claims, **characterized in that** the pilot stage contains two 2/2-port valves (3, 4).

6. Hydraulic actuator for activating a high- or medium-voltage circuit breaker (7) comprising a two-stage valve arrangement according to one of Claims 1 to 5.

## Revendications

1. Agencement de soupape à deux étages pour l'actionnement d'un piston (6) d'un agencement cylindre-piston hydraulique (12) d'un entraînement pour actionner un commutateur de puissance moyenne ou haute tension, comprenant un étage pilote comprenant au moins une soupape pilote (3, 4, 13) et un étage principal comprenant au moins une soupape principale (1, 2, 11),
- dans une première position de l'au moins une soupape pilote, une liaison hydraulique d'un réservoir haute pression (9) à l'agencement cylindre-piston (12) étant établie par le biais de l'étage principal de telle sorte qu'un fluide à haute pression soit acheminé à un espace (10) se trouvant d'un côté du piston (6), et
- dans une deuxième position de l'au moins une soupape pilote, l'espace (10) se trouvant d'un côté du piston (6) étant relié par le biais de l'étage principal à un réservoir basse pression (8),
**caractérisé en ce qu'**une soupape hydraulique (50) sert à la connexion entre une première conduite de pression (X) conduisant un fluide d'un côté de sortie de l'étage pilote connecté à au moins une entrée de commande de l'étage principal et une deuxième conduite de pression (Z) conduisant un fluide d'un côté de sortie de l'étage principal connecté à l'agencement cylindre-piston (12), la soupape hydraulique (50) possédant seulement deux raccords et comprenant :
- un boîtier (28) avec une première entrée de canal (21, 23) pour le raccordement à la première conduite de pression (X) et une deuxième entrée de canal (24, 26) pour le raccordement à la deuxième conduite de pression (Z) ainsi qu'une cavité (27) se trouvant entre la première et la deuxième entrée de canal,
- un corps de fermeture (20) déplaçable dans la cavité (27), dont la périphérie (42) au niveau d'au moins un endroit est plus grande que la périphérie respective de l'ouverture (31, 32) de la première et de la deuxième entrée de canal adjacente à la cavité, le corps de fermeture (20) étant adapté de par sa géométrie à la section transversale de ces ouvertures (31, 32) de telle sorte qu'il les ferme complètement lors de son application respective sur celles-ci,
- un premier élément de ressort (25) fixé dans la première ouverture de canal (21, 23), qui est connecté au niveau d'un premier côté (29) du corps de fermeture (20) à celui-ci, et qui, dans l'état détendu, pénètre dans la cavité (27),
- un deuxième élément de ressort (26) fixé dans la deuxième ouverture de canal (22, 24), qui est connecté au niveau d'un deuxième côté (30) du corps de fermeture (20) à celui-ci, et qui, dans l'état détendu, pénètre dans la cavité (27),
la soupape hydraulique étant insérée dans l'agencement de soupape entre la première conduite de pression (X) et la deuxième conduite de pression (Z) de telle sorte qu'un passage soit possible jusqu'à un débit volumique prédéfini ou jusqu'à une différence de pression prédéfinie et de telle sorte qu'au-dessus de ce débit volumique prédéfini ou de cette différence de pression prédéfinie, les deux conduites de pression soient séparées l'une de l'autre, la soupape hydraulique devenant active de cette manière dans les deux sens du débit,
l'agencement de soupape étant réalisé de telle sorte que dans un état statique, lorsqu'il ne se produit aucune commutation, la soupape hydraulique maintienne ouverte la connexion entre les conduites de pression, et
dans un état dynamique, lors de la commutation, une variation de la différence de pression produite entre les conduites de pression agissant sur le corps de fermeture (20) et provoquant une fermeture de la soupape hydraulique (50).

2. Agencement de soupape selon la revendication 1, **caractérisé en ce que** dans le cas de la soupape hydraulique (50), la première et la deuxième ouverture de canal (21 à 24) sont réalisées avec une dimension identique et **en ce que** le premier et le deuxième élément de ressort (25, 26) sont configurés de manière identique.

3. Agencement de soupape selon la revendication 1 ou 2, **caractérisé en ce que** dans le cas de la soupape hydraulique (50), l'ouverture (31, 32) de la première et de la deuxième entrée de canal adjacente à la cavité (27) est réalisée à chaque fois avec une forme ronde circulaire et **en ce que** le corps de fermeture (20) présente au niveau de ses côtés (29, 30) reliés aux éléments de ressort (25, 26) à chaque fois au moins une surface ronde circulaire en section transversale (AV), qui correspond à chaque fois exactement à la surface en section transversale de l'ouverture associée.

4. Agencement de soupape selon l'une quelconque des revendications précédentes, **caractérisé en ce que** dans le cas de la soupape hydraulique (50), le premier et le deuxième côté (29, 30) du corps de fermeture sont réalisés sous forme de portion sphérique.

5. Agencement de soupape selon l'une quelconque des revendications précédentes, **caractérisé en ce que** l'étage pilote contient deux soupapes à 2/2 voies (3, 4).

6. Entraînement hydraulique pour l'actionnement d'un commutateur de puissance moyenne ou haute tension (7) comprenant un agencement de soupapes à deux étages selon l'une quelconque des revendications 1 à 5.
